# EUROPEAN PATENT APPLICATION

(11) **EP 2 299 631 A1**
(43) Date of publication of application: **23.03.2011**
(21) Application number: 09305868.3
(22) Date of filing: 17.09.2009
(51) Int. Cl.: H04L 12/24, H04L 29/08, H04W 8/18

(54) **Mechanism to detect that a portable security device configured a communication device**

(71) Applicant: Gemalto SA, 92190 Meudon (FR)
(72) Inventor: Gayosso, Jose Luis, 92190 Meudon (FR)

(57) **Abstract**

The invention relates to a portable security device (SIM) for authenticating a user (USR) of a communication device (MP) to a server (SRV). The portable security device (SIM) comprises means for configuring a communication device (MP). The portable security device (SIM) stores rules defining at least one set of requests which can be sent to the portable security device (SIM) in order to configure a communication device (MP). The portable security device (SIM) comprises means for analyzing the requests it receives, and, when a set of requests received corresponds to one of the stored rules, for recording that the portable security device (SIM) attempted to configure the communication device (MP). The invention also relates to a system comprising a portable security device (SIM) and to a method for configuring a communication device (MP) with a portable security device (SIM).

## Description

The invention relates to device management. It relates more specifically to portable security devices such as SIM cards used for configuring communication devices such as cell phones.

A communication device is a device with communication capabilities. Examples of communication devices comprise a personal computer equipped with a networking equipment (e.g. WiFi card, Ethernet card, Wimax interface, etc.), a cellular phone, a PDA (personal digital assistant) with communication means (e.g. via Bluetooth, ZigBee, HiperLan 1 or 2, IrDa, USB, etc.), an M2M (machine to machine) device including a UICC, an ADSL box including a SIM, etc.

How to use portable security devices such as smart cards for authenticating users of communication devices to servers is well known in the art. The most widespread example is certainly the SIM card, which is used in GSM mobile phones. GSM mobile network operators typically "rent" access to their network to users. However users are typically free to choose many communication devices (potentially including totally unsafe communication devices) for accessing the network. Therefore many mobile network operators have decided to provide their users with portable security devices (typically SIM cards), and only a communication device in which a proper SIM card has been inserted can connect to the network, which is a guarantee for the mobile network operator (reduced risks of credentials being stolen / copied). This is mandatory on GSM networks.

With the development of the telecommunications industry, communication devices have become more and more complex. For example mobile phones are no more simple phones limited to voice services, but can now usually connect to the Internet, take pictures and videos, record sounds, play music, provide GPS information, etc.

It has become more and more complex to configure communication devices. This is a problem for network operators who are unable to sell services to many users simply because the users, even when they have a recent communication device able to deliver such service, often do not know how to configure the communication device. Typically configuring a mobile phone for Internet access requires typing the IP address of a proxy server, some port numbers, typing the address of a POP server for the email account, etc.

A new area of research and development has therefore emerged, which is called "device management". The applicant already manufactures portable security devices (in particular special SIM cards and special USB tokens) used to configure mobile phones and personal computers. The applicant also provides servers for device management (devices such as mobile phones can be configured by a server such as a GDM server through a network). In the context of mobile telephony, it has seemed useful to reuse the SIM card and assign it an additional task, namely the device management. SIM cards can therefore be used, when first connected into a mobile phone, to configure the mobile phone according to settings provided by the mobile network operator. Some standardization bodies have specified a number of ways to carry out device management. In particular OMA DM specifies how a server can configure a device, and how a SIM card can initialize a device. OMA DM implementation is growing. Another initiative, OMA CP, specifies how a server can configure a device, and how a SIM card can initialize a device, but the SIM card support is not yet implemented to the best of the applicant's knowledge. On-going standardization initiatives (such as DM_SC) should in the future specify how portable security devices such as smart cards can assist in configuring a device dynamically.

Unfortunately the problem of device management is not yet fully solved. In particular, network operators relying on portable security devices for configuring communication devices have a difficulty. It is currently very hard to determine, when a communication device is not responsive, whether the communication device is not responsive because it was not configured, whether it was configured but improperly, or whether something else happened. More specifically, it is very hard to know:
- whether the portable security device was not even requested to configure the communication device, or
- whether the portable security device was requested to configure the communication device, but failed to do so, or
- whether from the portable security device perspective the communication device was configured properly (e.g. all configuration commands properly executed, with a seemingly normal behavior from the communication device) but something went wrong (e.g. within the communication device, or possibly the configuration data in the portable security device was incorrect) and resulted in the configuration of the communication device being corrupted or otherwise inappropriate.

For example, in the context of device management (DM) standardization works, if a DM Server of a network operator can not initiate a Management Session with a communication device, it could be:
- due to the fact that the communication device was not yet bootstrapped. A bootstrap is the process of provisioning the DM client to a state where it is able to initiate a management session with a new DM server. But how long should it take for a communication device to bootstrap? It is currently considered that for the DM Profile: "After successfully processing the bootstrap, the OMA DM client SHOULD automatically initiate a client-initiated session to any DM server configured in the bootstrap at the next practical opportunity (i.e., when network connectivity and other factors would allow such a connection)". This does not give a predefined delay though.

This could also be:
- due to the fact that the bootstrap for that particular communication device failed. In this case, instead of a "successful notification" we should expect a "non successful bootstrap indication".

In general, the portable security device behaves as a slave, the master being the communication device (or sometimes another entity such as a remote server). Current techniques consist in using preferably standard portable security devices such as ISO 7816 compliant SIM cards, and in using standardized features of the SIM in order to store (e.g. at SIM manufacturing time) and at a later time (e.g. first insertion of the SIM in a new handset) retrieve configuration data. In general, the portable security device therefore does not comprise a specific command for configuring a communication device. Instead, configuring the communication device is typically achieved by sending (either by the communication device itself or by another entity) a series of generic commands to the portable security device. Such generic commands may include in particular commands to navigate through a file structure in the portable security device, commands to read data from the portable security device (in this context, the read command would happen to read configuration data, but without being designed specifically for that purpose), and/or commands to trigger applications (such as java applets) stored in the portable security device. Commands to navigate through a file structure may for example include the ISO 7816-4 SELECT command for selecting ISO 7816 DF files (corresponding to directories and subdirectories) and ISO 7816 EF files (which may be for example files containing configuration data or containing pointers to other files containing relevant information for determining configuration data). Commands to read data may comprise for example ISO 7816-4 READ BINARY, READ RECORD, or GET DATA commands. Unfortunately, such commands (SELECT, READ BINARY, etc.) being extremely generic, they may be used for multiple purposes, possibly having absolutely nothing to do with configuration of a communication device. Therefore, the portable security device cannot draw any conclusion from the mere fact that it received and processed a given command (for example a SELECT command or a READ BINARY command) vis-à-vis the status of the configuration of the communication device, and anyway a portable security device such as a SIM card is typically not designed to monitor the commands which it received. Instead, a SIM typically receives a command, processes it, and does not log this fact, so that there is no way to know at a later time (e.g. a few days later, after receiving a complaint from the user that the communication device does not provide the requested services, etc.) that in the past such or such command was launched. It would not be possible for a typical smart card such as a SIM card to log all commands it receives, because over the years a SIM card may receive thousands and thousands of commands, while a SIM card typically has only a few kilobytes of non volatile memory (in general 64K or 128K for high-end SIM cards as of 2009, and 16K or 32K for low-end SIM cards). There is a small percentage of SIM cards equipped with an additional high capacity memory chip (which can reach a few megabytes), but this is very specific and uncommon for the moment, and it is also quite expensive. It would anyway be counterproductive to fill this expensive memory with useless log files.

This device management problem is more particularly relevant for communication devices supporting at least two communication channels, such as a mobile phone comprising a GSM communication channel (e.g. for voice, SMS, signaling...) and an Internet communication channel (e.g. Internet connection for web, email, etc. through 3G, WiFi, etc.). In this last example, the GSM communication channel usually works well (out of the box), but the Internet communication channel may require lengthy configurations in order to be fully operational (Internet settings, sometimes specific to the communication device used, etc.). The network operator can typically only know that a communication device is properly configured for Internet services when it is able to detect that the communication device accesses the Internet. If a configuration problem disables Internet access, the network operators cannot presently know the reasons of the configuration issue, although another communication channel (e.g. GSM) with the communication device exists.

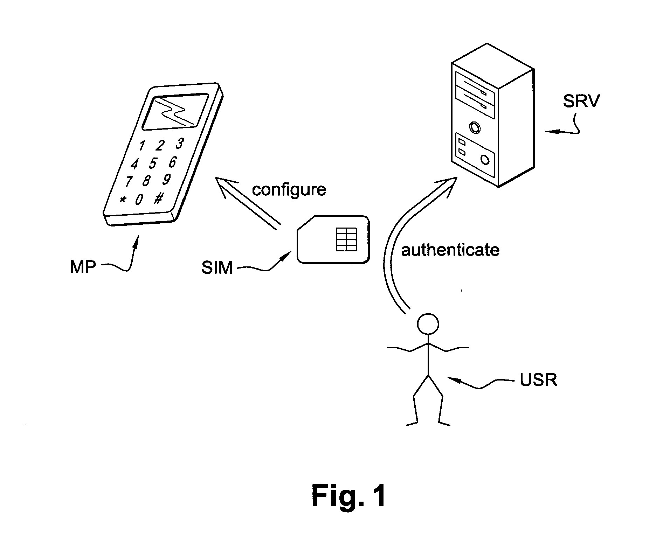

The invention and its advantages will be explained more in details in the following specification referring to Figure 1 which represents a specific embodiment of the invention in which a SIM card SIM can be inserted into a mobile phone MP, in order to configure the mobile phone MP and to authenticate a user USR of the mobile phone to a server SRV of a network operator. The user USR is typically a subscriber of the network operator and receives the SIM card SIM from the network operator.

The invention relates to a portable security device SIM for authenticating a user USR of a communication device MP to a server SRV. It may be for example a SIM card as described above, but it can also be any other suitable portable security device (e.g. secure MMC card, USB token, TPM, UICC in any suitable form factor, etc.) of state of the art (all subsequent comments made in relation to SIM cards apply to other types of portable security devices unless otherwise stated). A portable security device SIM usually has at least a logical protection (e.g. an operating system or wired logic in the portable security device which protects access to the portable security device according to access control policies which may rely on cryptographic material), and preferably also a physical protection (in order to prevent, to the extent possible, physical tampering with the portable security device). The portable security device SIM comprises means for configuring a communication device MP. Such means can be compliant with standard initiatives, or can be proprietary (e.g. specific to a customer or a project and not interoperable with other solutions).

According to the invention, the portable security device SIM stores rules defining at least one set of requests which can be sent to the portable security device SIM in order to configure a communication device MP. The rules can take different forms, for example they can consist of policies. The terms rule and policy are used interchangeably in the sequel. The rules can be implemented thanks to a LEX specification, optionally complemented by a YACC grammar, or with other state-of-the-art technologies and tools, or implemented manually (from scratch). The rules can be implemented in the form of a finite state machine which is fed by the portable security device each time it receives a command, or of a parallel process monitoring the portable security device activity and triggering interrupts when a predefined sequence of events is matched, or in other manners. The requests sent to the portable security devices can take the form of function calls, commands, operations, or input/outputs of all kinds (e.g. through a stack, or a specific register etc.). The requests can be encapsulated in packets according to a protocol such as USB protocol, ISO 7816 protocol, TCP/IP protocol, etc. The requests can be for example, especially in the case of SIM cards (but not exclusively in this case), ISO 7816-4 APDU commands. There may be different ways to query the portable security device in order to configure the communication device, and it can generally not be known in advance how the communication device (or any other entity) will query the portable security device. It is often not conceivable to force all developers to use a single query mechanism. For example, the portable security device may store configuration data in multiple files, and maybe it cannot be determined in which order those files will be read. Many different APDU sequences could be used to achieve the same final result. Ideally, the rules should cover every possibility, but it is also possible to only detect the most likely combinations and discard the most awkward which have very little chances to be used. An example of rule can be: command SELECT MF (master file 3F00), immediately followed by SELECT DF_CONFIG (selects a subdirectory called DF_CONFIG containing configuration information), immediately followed by SELECT EF_CONFIG (selects a file containing configuration information applicable to any communication device), followed by a READ_BINARY command for reading relevant configuration data, immediately followed by SELECT EF_DEV_SPECIFIC (selects a file containing communication device specific information), followed by a READ_BINARY command for reading the contents and searching through them in order to identify information specific to the targeted communication device. Configuration requests are generally sent by the communication device itself. But in general the portable security device does not (and sometimes cannot with certainty) verify where the requests come from. The requests could also be sent by other entities (e.g. remote servers). A remote server being by definition remote, it may have to rely on the communication device to route the requests to the portable security device. The communication device may itself not have the possibility to communicate directly with the portable security device, for example if the portable security device is a smart card, and the communication device does not have a smart card interface, the communication device may rely on a smart card reader through which requests can be sent to the portable security device (the smart card), e.g. the communication device may comprise a slot able to receive the smart card reader, or simply a USB port to which a USB reader for smart cards can be connected.

According to the invention, the portable security device SIM further comprises means for (i) analyzing the requests it receives, and, when a set of requests received corresponds to one of the stored rules, for (ii) recording that the portable security device SIM attempted to configure the communication device MP. The recording can take place in a special log file (e.g. a dedicated EF in a SIM card). The recording may additionally comprise information on which rule was verified, and possibly on which parameters triggered the rule (for example when a rule specifies multiple possible events, it may be useful to record which of the events triggered the rule). It is also possible to record extra information such as date and time, context, etc. Some information (such as date and time) is not necessarily available from within the portable security device, and its reliability is not necessarily established, but if it can be imported into the portable security device, it can be useful. Preferably, this log file should be remotely accessible, e.g. a network operator might want to check this log file through one communication channel (e.g. GSM) in order to understand if the other communication channel (e.g. Internet) is supposed to be operational, or what kind of problems may have been encountered. The recording can also, for example, take place in an SMS or be communicated through an SMS. Such SMS is preferably automatically sent to the network operator in order to provide a quick status on the configuration.

According to a preferred embodiment, the portable security device has an ISO 7816 logical interface (possibly on top of a non-ISO 7816 hardware interface) and the rules track in particular APDU commands received on this ISO 7816 logical interface. For example, the APDU manager may be modified in order to flag any APDU corresponding to the first APDU to be identified by the rule, and when such APDU is flagged, it can check whether the next APDU received corresponds to one of the APDUs required by the rule, and so on. Alternatively (instead of changing the APDU manager) the code of the APDU commands themselves can be modified in order to perform some checks against the rules when such APDU command is run (e.g. before executing the intended task of the APDU command). This alternative requires low level modifications which are not necessarily welcome (it might be preferred for architectural reasons not to modify the portable security device at this level).

In some instances, a rule may simply consist in checking whether a specific configuration file was accessed (e.g. READ_BINARY APDU triggered on this file, i.e. after this file was selected). A configuration file is a file containing data for configuring a communication device. The parameters of the READ_BINARY (e.g. offset and number of bytes read) may be checked (and optionally recorded in the log file) in order to verify that the relevant parts of the configuration file were indeed retrieved from the portable security device and therefore had a chance to be taken into account by the communication device. In ISO 7816-4, the READ_BINARY command does not have to specify the file to read in input parameters. The file to read is known from the current context (currently selected file depending on previous SELECT commands, etc.).

According to a preferred embodiment of the invention, the portable security device SIM is further arranged to identify the communication device MP individually, and to record an identifier of the communication device MP together with the fact that a rule is verified. By "identify individually", it is meant that it is the specific device that is identified, and not simply the type of device (i.e. not simply the exact model type, but rather which specific instance of the model). This can be done e.g. by checking the serial number of the communication device, which is supposed to be unique. This allows tracking exactly which communication device was configured. Sometimes this is implicit, e.g. some network operators sell the communication device (which they subsidize) together with the portable security device, and lock the two devices together in order to prevent churn (they don't want to pay for part of the communication device and not receive the expected revenue from network access subscription), but sometimes the network operators have no visibility at all on which communication devices are used by their users.

The invention also relates to a system comprising a portable security device SIM as described above and a communication device MP, and/or the server SRV.

The invention also relates to a method for a portable security device SIM to configure a communication device MP, the portable security device SIM being designed for authenticating a user USR of the communication device MP to a server SRV. The method further comprises the steps of
- storing rules (preferably in the portable security device SIM) defining at least one set of requests which can be sent to the portable security device SIM in order to configure the communication device MP,
- analyzing requests received by the portable security device SIM, and, when a set of requests received matches one of the stored rules, recording that the portable security device SIM attempted to configure the communication device MP.

The preferred embodiments and variants described above in relation to any one of the following objects/methods: {portable security device, systems, method for configuring a communication device} can apply equally to the other objects/methods.

## Claims

1. Portable security device (SIM) for authenticating a user (USR) of a communication device (MP) to a server (SRV), the portable security device (SIM) comprising means for configuring a communication device (MP), **characterized in that**
a. the portable security device (SIM) stores rules defining at least one set of requests which can be sent to the portable security device (SIM) in order to configure a communication device (MP), and
b. the portable security device (SIM) comprises means for analyzing the requests it receives, and, when a set of requests received corresponds to one of the stored rules, for recording that the portable security device (SIM) attempted to configure the communication device (MP).

2. Portable security device (SIM) according to claim 1, wherein the requests sent to the portable security device (SIM) by the communication device (MP) in order to configure itself comprise ISO 7816 APDU commands.

3. Portable security device (SIM) according to claim 1 or 2, wherein a rule comprises detecting a read request on a configuration file.

4. Portable security device (SIM) according to claim 3, wherein a rule specifies that requests sent to the portable security device (SIM) in order to configure the communication device (MP) have to comprise commands to select subdirectories, to select a configuration file, and to read relevant parts of the configuration file.

5. Portable security device (SIM) according to any previous claim, further arranged to individually identify a communication device (MP) to be configured, and to record, when a rule is verified, an identifier of the communication device (MP) together with the fact that the rule is verified.

6. System comprising a portable security device (SIM) according to any previous claim and a communication device (MP).

7. System comprising a portable security device (SIM) according to any of claims 1 to 5 and the server (SRV).

8. Method for a portable security device (SIM) to configure a communication device (MP), the portable security device (SIM) being designed for authenticating a user (USR) of the communication device (MP) to a server (SRV), the method further comprising the steps of
a. storing in the portable security device (SIM) rules defining at least one set of requests which can be sent to the portable security device (SIM) in order to configure the communication device (MP),
b. analyzing requests received by the portable security device (SIM), and, when a set of requests received matches one of the stored rules, recording that the portable security device (SIM) attempted to configure the communication device (MP).
